# EUROPEAN PATENT SPECIFICATION

(11) **EP 2 434 114 B1**
(45) Date of publication and mention of the grant of the patent: **20.08.2014**
(21) Application number: 11007602.3
(22) Date of filing: 19.09.2011
(51) Int. Cl.: F01N 3/025, F01N 3/027, F01N 3/20, F01N 3/22, F01N 3/30, F01N 3/32, F02D 9/02

(54) **Exhaust system and retrofitting method**
Abgasanlage und Nachrüstungsverfahren
Système d'échappement et procédé de modification

(30) Priority: 27.09.2010 US 891063
(43) Date of publication of application: 28.03.2012
(73) Proprietor: Caterpillar, Inc., Peoria, IL 61629-9510 (US)
(72) Inventor: COX, Glenn B., Peoria, Illinois 61629-9510 (US); RICHEY, R. Zachary, Peoria, Illinois 61629-9510 (US); BROWN, Cory A., Peoria, Illinois 61629-9510 (US)
(74) Representative: Wagner & Geyer

(56) References cited:
- EP-A1- 1 300 558
- EP-A2- 1 522 697
- DE-A1-102008 032 604
- JP-A- 6 159 081

## Description

### Technical Field

The present disclosure is directed to an exhaust system and a retrofitting method and, more particularly, to a method of retrofitting an existing engine with an improved exhaust system.

### Background

Engines, including diesel engines, gasoline engines, gaseous fuel powered engines, and other engines known in the art exhaust a complex mixture of air pollutants. These air pollutants can include gaseous compounds such as the oxides of nitrogen, and solid material known as particulate matter or soot. Due to increased attention on the environment, exhaust emission standards have become more stringent and the amount of gaseous compounds and solid material emitted from an engine is regulated depending on the type of engine, size of engine, and/or class of engine.

One method implemented by engine manufacturers to comply with the regulation of pollutants exhausted to the environment has been to reduce, convert, or otherwise remove the gaseous compounds and particulate matter from the exhaust flow of an engine with catalyzed filters and traps. These catalyzed filters and traps, however, may only function efficiently under particular operating conditions. For example, some catalyzed filters only function efficiently when exposed to elevated temperatures. Particulate traps only function for a period of time, until they become saturated with soot. In order for the particulate traps to continue operation, they may need to be heated above a combustion threshold of the trapped particulate matter such that the particulate matter is burned away. Accordingly, some engine exhaust systems are equipped with means for artificially raising a temperature of the exhaust passing through the filters and traps such that use of these devices can be improved and maintained.

An exemplary exhaust system that artificially raises the temperature of exhaust passing through a catalyzed filter is disclosed in U.S. Patent Number 6,227,180 issued to Hoffmann et al. on May 8,2001 ("the '180 patent). Specifically, the ' 180 patent discloses a supercharged internal combustion engine having a catalytic converter disposed within an exhaust duct of the engine. The engine includes a secondary air duct extending from an intake downstream of a charger to a point in the exhaust duct upstream of the catalytic converter, and a valve disposed within the secondary air duct. The engine also includes a throttle member disposed in the intake at a location downstream of the charger. The throttle member and the valve are controlled in such a manner that sufficient air is provided to the exhaust duct to promote combustion in the catalytic converter and rapidly heat up the catalytic converter.

Another exhaust system for an engine is known from DE 10 2008 032 604 A1. The exhaust system comprises an exhaust treatment device disposed in an exhaust duct and an exhaust heater located upstream of the exhaust treatment device. A secondary air supply branches from a location downstream of a compressor to the exhaust heater.

JP 6159081 A discloses an engine having a super charger and an exhaust system. A circulation path circulates discharged intake air into the suction port of the super charger. When the temperature of the discharged intake air is raised above an allowable upper limit, the discharged intake air is bypassed to the upstream side of purifying means located in the exhaust system.

Further, EP 1 300 558 A1 discloses an engine including an exhaust system and a compressor. The exhaust system has a bypass passage including an air valve. The first and second ends of the bypass passage are connected to locations directly upstream and downstream of the compressor.

The disclosed system and method address one or more of the problems discussed above and/or other problems of the prior art.

In accordance with the present Invention, a method of retrofitting an engine as set forth in claim 1 and an exhaust system for an engine as set forth in claim 2 are provided. Preferred embodiments of the invention are claimed in the dependent claims.

### Brief Description of the Drawings

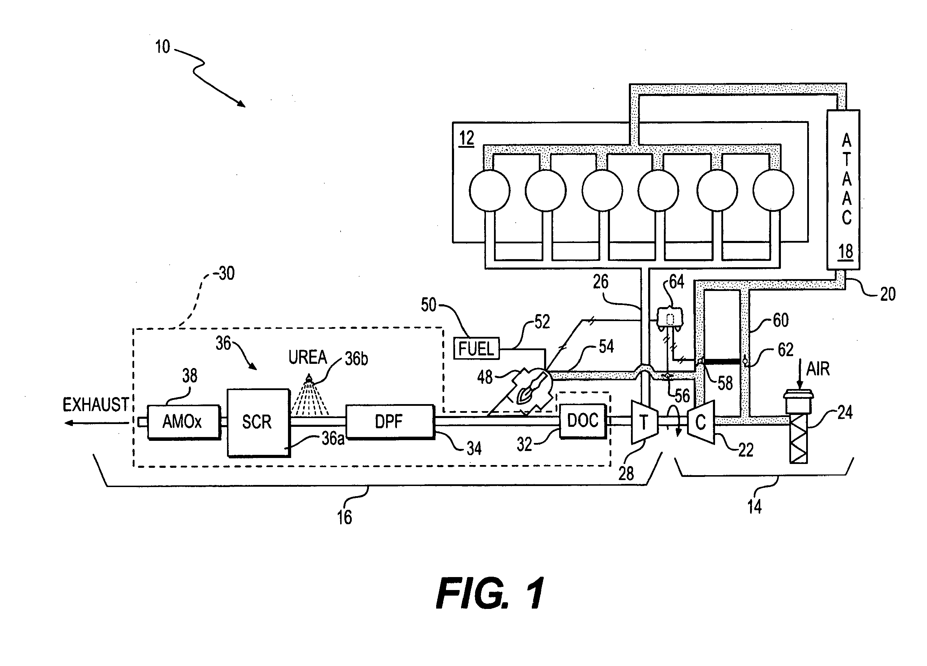

Fig. 1 is a schematic and diagrammatic illustration of an exemplary disclosed power unit.

### Detailed Description

Fig. 1 illustrates an exemplary power unit 10. For the purposes of this disclosure, power unit 10 is depicted and described as including a four-stroke diesel engine 12, an air induction system 14, and an exhaust system 16. Air induction system 14 may be configured to direct compressed air or a mixture of air and fuel into engine 12. Engine 12 may combust the air and fuel to generate a mechanical output and a flow of exhaust gases. Exhaust system 16 may be configured to direct the flow of exhaust from engine 12 to the atmosphere. One skilled in the art will recognize that power unit 10 may include another type of internal combustion engine, if desired, such as a two- or four-stroke gasoline or a gaseous fuel-powered engine.

Air induction system 14 may include multiple components that cooperate to condition and introduce compressed air or a mixture of compressed air and fuel into engine 12. For example, air induction system 14 may include an air cooler 18 located within an inlet duct 20 downstream of one or more compressors 22. Compressors 22 may be configured to draw air through a filter 24, pressurize the air, and direct the air through cooler 18 into engine 12 via inlet duct 20. As the air passes through cooler 18, cooler 18 may draw heat out of the air, thereby reducing a temperature and increasing a density of the air.

Exhaust system 16 may include multiple components that condition and direct exhaust from engine 12 to the atmosphere. For example, exhaust system 16 may include an exhaust duct 26, one or more turbines 28 driven by exhaust flowing through duct 26, and an aftertreatment module 30 fluidly connected downstream of turbines 28. Exhaust from engine 12 may be directed to pass through turbines 28 and thereby drive turbines 28 to rotate compressors 22 and compress inlet air. After exiting turbines 28, the flow of exhaust may pass through aftertreatment module 30 and be conditioned prior to discharge to the atmosphere.

Aftertreatment module 30 may embody a modular assembly of exhaust treatment components contained within a common housing and having plug-and-play functionality. That is, aftertreatment module 30 may be used with many different engines and/or power unit configurations, be generally self-contained, and have a simplified connection interface that facilitates exhaust, fluid, power, and/or data communication with other components of power unit 10. In one example, aftertreatment module 30 includes, among other things, an oxidation catalyst 32 located upstream of a particulate filter 34, a selective catalytic reduction (SCR) device 36 located downstream of particulate filter 34, and a cleanup catalyst 38 located downstream of SCR device 36. It is contemplated, however, that aftertreatment module 30 may include different, fewer, or additional components than those recited above. For example, aftertreatment module 30 may include only particulate filter 34, if desired. It is also contemplated that the components described as being contained within aftertreatment module 30 may alternatively be included as separate and stand-alone components.

Oxidation catalyst 32 may be, for example, a diesel oxidation catalyst (DOC). As a DOC, oxidation catalyst 32 may include a porous ceramic honeycomb structure, a metal mesh, a metallic or ceramic foam, or another suitable substrate coated with or otherwise containing a catalyzing material, for example a precious metal, that catalyzes a chemical reaction to alter a composition of exhaust passing through oxidation catalyst 32. In one embodiment, oxidation catalyst 32 may include palladium, platinum, vanadium, or a mixture thereof that facilitates a conversion of NO to NO₂ to promote a reduction process within SCR device 36. In another embodiment, oxidation catalyst 32 may alternatively or additionally perform particulate trapping functions (i.e., oxidation catalyst 32 may be a catalyzed particulate trap), hydrocarbon reduction functions, carbon-monoxide reduction functions, and/or other functions known in the art.

Particulate filter 34 may be configured to remove particulate matter from the exhaust flow of engine 12. It is contemplated that particulate filter 34 may be a diesel particulate filter (DPF) including electrically conductive or non-conductive coarse mesh metallic or ceramic elements having openings large enough to allow exhaust to pass through, but small enough to trap a desired size and/or amount of particulate matter. It is contemplated that particulate filter 34 may include a catalyst coating, if desired, for reducing an ignition temperature of the particulate matter trapped by particulate filter 34. The catalyst coating may support the reduction of HC, CO, and/or particulate matter, and may include, for example, a base metal oxide, a molten salt, and/or a precious metal.

SCR device 36 may receive particulate-reduced exhaust from downstream of particulate filter 34 and further reduce constituents of the exhaust to innocuous gases. In one example, SCR device 36 may include a catalyst substrate 36a located downstream from a reductant injector 36b. A gaseous or liquid reductant, most commonly urea ((NH₂)₂CO), a water/urea mixture, a hydrocarbon for example diesel fuel, or ammonia gas (NH₃), may be sprayed or otherwise advanced into the exhaust upstream of catalyst substrate 36a by reductant injector 36b. As the reductant is adsorbed onto the surface of catalyst substrate 36a, the reductant may react with NOx (NO and NO₂) in the exhaust gas to form water (H₂O) and elemental nitrogen (N₂). The reduction process performed by SCR device 36 may be most effective when a concentration of NO to NO₂ supplied to SCR device 36 is about 1:1. Oxidation catalyst 32 may be helpful in providing this desired concentration.

During operation of power unit 10, it may be possible for too much urea to be injected into the exhaust (i.e., urea in excess of that required for appropriate NOₓ reduction). In this situation, known as "ammonia slip", some amount of ammonia may pass through catalyst substrate 36a to the atmosphere, if not otherwise accounted for. To minimize the magnitude of ammonia slip, cleanup catalyst 38 may be located downstream of SCR device 36. Cleanup catalyst 38 may include a substrate coated with a catalyzing chemical that oxidizes residual ammonia in the exhaust to form water and elemental nitrogen. After exiting cleanup catalyst 38, the exhaust from engine 12 may be discharged to the atmosphere.

In some situations, it may be helpful to heat the exhaust from engine 12 to a desired temperature as it flows through aftertreatment module 30. For example, SCR device 36 may only operate or operate more efficiently when exposed to exhaust of a particular temperature. Similarly, particulate filter 34 may require elevated temperatures to initiate regeneration (i.e., to burn away trapped particulate matter). Accordingly, exhaust system 16 may include an exhaust heater 48 located upstream of aftertreatment module 30. Alternatively, exhaust heater 48 may form a portion of aftertreatment module 30, if desired.

Exhaust heater 48 may embody a fuel-fired burner configured to warm the exhaust from engine 12 passing through the components of aftertreatment module 30. Exhaust heater 48 may be in fluid communication with exhaust duct 26 at a location upstream of particulate filter 34, and connected to a fuel supply 50 via a fuel passage 52 and to inlet duct 20 via an air passage 54. Exhaust heater 48 may be configured to combust a mixture of fuel from passage 52 and air from passage 54 to produce a flame jet directed into the exhaust flow from engine 12. The flame jet may warm the exhaust and thereby heat the downstream components of aftertreatment module 30 to one or more desired temperature thresholds.

A valve 56, for example a throttle valve, may be disposed within air passage 54 to help regulate a flow of combustion air to exhaust heater 48. In one example, valve 56 may be electronically controlled based on a desired air-to-fuel ratio within exhaust heater 48. It should be appreciated, however, that valve 56 may be controlled in another manner, if desired, such as manually or mechanically based on a pressure of the combustion air within passage 54 or based on another operating parameter.

When manufacturing a new power unit 10 that includes exhaust system 16, compressors 22 and turbines 28 may be adequately sized to supply sufficient flows of combustion air to both engine 12 and to exhaust heater 48 for most or all situations. However, when an existing power unit 10 (e.g., a power unit 10 having an older engine 12) is newly equipped with exhaust heater 48, the existing compressors 22 and turbines 28 may provide too little combustion air for some situations. Accordingly, an existing power unit 10 may need to be retrofitted with additional components to facilitate proper engine operation and exhaust heating under all conditions. These additional components may include, among other things, a restrictor valve 58 placed within inlet duct 20 downstream of compressors 22, a passage 60 that bypasses compressors 22, and a bypass valve 62 located within passage 60.

Restrictor valve 58 may be disposed within inlet duct 20 between compressors 22 and cooler 18, and configured to selectively increase a back pressure of compressors 22. Specifically, restrictor valve 58 may embody a butterfly valve that is movable between an open position, at which the compressed air flowing through inlet duct 20 is substantially unrestricted, and a closed position, at which the flow of compressed air through inlet duct 20 is restricted or even blocked. Restrictor valve 58 may move to any position between the open and closed positions to thereby provide a variable restriction on the flow of compressed air within inlet duct 20. When the flow of compressed air through inlet duct 20 is restricted, a pressure of the air within inlet duct 20 between restrictor valve 58 and compressors 22 may increase. The increased air pressure within inlet duct 20 may increase an amount of combustion air from compressors 22 that is diverted to exhaust heater 48 via air passage 54. Restrictor valve 58, in the disclosed embodiment, may be electronically actuated based on a desired air-to-fuel ratio within exhaust heater 48, a pressure or flow rate within passage 60, or another similar parameter.

In some situations, for example during low engine loading when restrictor valve 58 is in a flow-restricting position, it may be possible for the supply of combustion air reaching engine 12 to be lower than desired. During these situations, engine 12, through a natural pumping action of associated pistons (not shown), may draw in additional air via passage 60.

Bypass valve 62 may be configured to selectively allow air flow through passage 60 in the direction of engine 12, but inhibit flow in the reverse direction (i.e., inhibit air pressurized by compressors 22 from being forced back out to the atmosphere through filter 24 or from being recirculated through compressors 22). In one embodiment, bypass valve 62 may embody a spring-biased check valve that is moveable in response to a pressure differential between inlet duct 20 at a location downstream of restrictor valve 58 and atmospheric pressure. In another embodiment (shown in Fig. 1), bypass valve 62 may be mechanically connected to restrictor valve 58 and configured to open when restrictor valve 58 closes and vice versa. In yet another embodiment, bypass valve 62 may be independently controlled via electronic means.

A controller 64 may be in communication with the valves and with exhaust heater 48 of power unit 10 to selectively implement exhaust heating. Controller 64 may embody a single or multiple microprocessors, field programmable gate arrays (FPGAs), digital signal processors (DSPs), etc., that are capable of controlling operations of exhaust system 16 in response to various input. Numerous commercially available microprocessors can be configured to perform the functions of controller 64. It should be appreciated that controller 64 could readily embody a microprocessor separate from those that control non-exhaust related functions, and that controller 64 may communicate with a general power unit processor via datalinks or other methods. Various other known circuits may be associated with controller 64, including power supply circuitry, signal-conditioning circuitry, actuator driver circuitry (i.e., circuitry powering solenoids, motors, or piezo actuators), communication circuitry, and other appropriate circuitry.

According to one embodiment, controller 64 may be configured to implement exhaust heating by opening valve 56 and activating exhaust heater 48 such that a mixture of fuel and air having a desired ratio is combusted within exhaust heater 48. In some situations, such as at low engine load, controller 64 may be configured to also move restrictor valve 58 toward the second position, thereby increasing a backpressure of compressors 22 and a flow of combustion air through passage 54. Controller 64 may be configured to execute sequences of instructions, implement internally stored algorithms, and/or reference one or more internal relationship maps during movement of valves 56 and 58 and activation of exhaust heater 48, and do so in response to sensory input, monitored operating conditions of power unit 10, elapsed periods of time, and other similar parameters known in the art.

### Industrial Applicability

The exhaust system of the present disclosure may be applicable to a variety of engines including, for example, diesel, gasoline, and gaseous fuel-powered engines. In fact, the disclosed exhaust system may be implemented into any new or existing engine that benefits from exhaust treatment that includes heating. When manufacturing a new engine with state-of-the-art pollution control devices, other components of the new engine are generally designed to accommodate the devices. For example, the turbochargers of a new engine are designed to provide sufficient air for both engine combustion and for use by the catalyzed filters, traps, and exhaust heating devices. Existing engines, however, may not be designed to accommodate newer pollution control devices. That is, the turbochargers of the existing engines may only provide sufficient air for combustion within the engine, and lack the air required for the pollution control devices. Accordingly, the existing engines may require retrofitting to accept the newer pollution control devices. A method of retrofitting an existing engine with the disclosed exhaust system will now be described.

An existing engine 12 may already be equipped with exhaust duct 26 and turbines 28, but be missing any one or all the components of aftertreatment module 30, exhaust heater 48, and the components that facilitate air and fuel supply to exhaust heater 48. Accordingly, the retrofit method may include placing any one or more exhaust treatment devices of aftertreatment module 30, for example particulate filter 34, in exhaust duct 26 of engine 12, and then placing exhaust heater 48 in fluid communication with exhaust duct 26 at a location upstream of the corresponding exhaust treatment device. Fuel supply 50 may then be connected to exhaust heater 48 via fuel passage 52. Similarly, a first end of air passage 54 may be connected to inlet duct 20 at a location downstream of compressors 22, and a second end of air passage 54 may be connected to exhaust heater 48. The retrofit method may then include placing restrictor valve 58 in inlet duct 20 at a location downstream of the first end of air passage 54. The method may further include connecting a first end of passage 60 to inlet duct 20 at a location upstream of compressors 22, connecting a second end of passage 60 to inlet duct 20 at a location downstream of the first end of air passage 54, and then placing bypass valve 62 in passage 60. In the embodiment depicted in Fig. 1, the method of retrofitting engine 12 may further include mechanically connecting restrictor valve 58 to bypass valve 62, and then electrically connecting controller 64 to exhaust heater 48 and to valves 56 and 58.

By retrofitting existing engines 12 with the disclosed exhaust system 16, these older engines 12 can become compliant with new emission regulations without requiring significant changes to core components. In particular, the disclosed exhaust system 16 may obviate the need to replace expensive compressors, turbines, and other similar components. By reducing the number of core components of engine 12 that must be replaced to meet new emission regulations, a cost of operating and maintaining older equipment may be reduced.

It will be apparent to those skilled in the art that various modifications and variations can be made to the exhaust system and retrofit method of the present disclosure without departing from the scope of the disclosure. Other embodiments will be apparent to those skilled in the art from consideration of the specification and practice of the system and method disclosed herein. It is intended that the specification and examples be considered as exemplary only, with a true scope of the disclosure being indicated by the following claims and their equivalents.

## Claims

1. A method of retrofitting an engine (12), comprising:
placing an exhaust treatment device (34, 36) in an exhaust duct (26) of the engine;
placing an exhaust heater (48) in fluid communication with the exhaust duct of the engine at a location upstream of the exhaust treatment device;
connecting an air supply passage (54) at a first end to an inlet duct (20) of the engine at a location downstream of a compressor (22) and at a second end to the exhaust heater; and
placing a restrictor valve (58) in the inlet duct of the engine at a location downstream of the first end of the air supply passage;
connecting a bypass passage (60) at a first end to the inlet duct of the engine at a location upstream of the compressor and at a second end to the inlet duct at a location downstream of the first end of the air supply passage; and
placing a bypass valve (62) in the bypass passage.

2. An exhaust system (16) for an engine (12), comprising:
an exhaust duct (26);
an exhaust treatment device (34, 36) disposed within the exhaust duct;
an exhaust heater (48) located in communication with the exhaust duct at a location upstream of the exhaust treatment device;
an air supply passage (54) extending from an inlet duct (20) of the engine at a location downstream of a compressor (22) to the exhaust heater (48); and
a restrictor valve (58) disposed within the inlet duct of the engine at a location downstream of an inlet of the air supply passage;
abypass passage (60) having an inlet in fluid communication with the inlet duct at a location upstream of the compressor and an outlet in fluid communication witch the inlet duct at a location downstream of the compressor; and
a bypass valve (62) disposed within the bypass passage.

3. The exhaust system of claim 2, wherein:
the restrictor valve is electronically controlled; and
the bypass valve is mechanically controlled.

4. The exhaust system of claim 3, wherein the bypass valve is mechanically connected to move with the restrictor valve.

5. The exhaust system of claim 3, wherein the bypass valve is a check valve.

6. The exhaust system of claim 3, further including a controller (64) in communication with the exhaust heater and the restrictor valve, the controller configured to activate the exhaust heater and close the restrictor valve to initiate exhaust heating.

7. A power unit (10), comprising:
an engine (12);
an inlet duct (20);
a compressor (22) disposed within the inlet duct to pressurize air directed into the engine; and
the exhaust system (16) as in any one of claims 2-6 configured to direct exhaust from the engine to the atmosphere.

## Patentansprüche

1. Verfahren zum Nachrüsten eines Motors (12), welches folgendes aufweist:
Anordnen einer Abgasbehandlungsvorrichtung (34, 36) in einer Abgasleitung (26) des Motors;
Anordnen einer Abgasheizvorrichtung (48) in Strömungsmittelverbindung mit der Abgasleitung des Motors an einer Stelle stromaufwärts der Abgasbehandlungsvorrichtung;
Verbinden eines Luftversorgungsdurchlasses (54) an einem ersten Ende mit einer Einlassleitung (20) des Motors an einer Stelle stromabwärts eines Kompressors (22) und an einem zweiten Ende mit der Abgasheizvorrichtung; und
Anordnen eines Begrenzungsventils (58) in der Einlassleitung des Motors an einer Stelle stromabwärts des ersten Endes des Luftversorgungsdurchlasses;
Verbinden eines Bypass-Durchlasses (60) an einem ersten Ende mit der Einlassleitung des Motors an einer Stelle stromaufwärts des Kompressors und an einem zweiten Ende mit der Einlassleitung an einer Stelle stromabwärts des ersten Endes des Luftversorgungsdurchlasses; und
Anordnen eines Bypass-Ventils (62) im Bypass-Durchlass.

2. Abgassystem (16) für einen Motor (12), der folgendes aufweist:
eine Abgasleitung (26);
eine Abgasbehandlungsvorrichtung (34, 36), die in der Abgasleitung angeordnet ist;
eine Abgasheizvorrichtung (48), die in Verbindung mit der Abgasleitung an einer Stelle stromaufwärts der Abgasbehandlungsvorrichtung gelegen ist;
einen Luftversorgungsdurchlass (54), der sich von der Einlassleitung (20) des Motors an einer Stelle stromabwärts eines Kompressors (22) zur Abgasheizvorrichtung (48) erstreckt; und
ein Begrenzungsventil (58), welches in der Einlassleitung des Motors an einer Stelle stromabwärts eines Einlasses des Luftversorgungsdurchlasses angeordnet ist;
einen Bypass-Durchlass (60), der einen Einlass in Strömungsmittelverbindung mit der Einlassleitung an einer Stelle stromaufwärts des Kompressors hat, und einen Auslass in Strömungsmittelverbindung mit der Einlassleitung an einer Stelle stromabwärts des Kompressors; und
ein Bypass-Ventil (62), welches in den Bypass-Durchlass angeordnet ist.

3. Abgassystem nach Anspruch 2, wobei
das Begrenzungsventil elektronisch gesteuert ist; und
das Bypass-Ventil mechanisch gesteuert ist.

4. Abgassystem nach Anspruch 3, wobei das Bypass-Ventil mechanisch angeschlossen ist, um sich mit dem Begrenzungsventil zu bewegen.

5. Abgassystem nach Anspruch 3, wobei das Bypass-Ventil ein Rückschlagventil ist.

6. Abgassystem nach Anspruch 3, welches weiter eine Steuervorrichtung (64) in Verbindung mit der Abgasheizvorrichtung und dem Begrenzungsventil aufweist, wobei die Steuervorrichtung konfiguriert ist, um die Abgasheizvorrichtung zu aktivieren und das Begrenzungsventil zu schließen, um eine Abgasbeheizung zu initialisieren.

7. Leistungseinheit (10), die folgendes aufweist:
einen Motor (12);
eine Einlassleitung (20);
einen Kompressor (22), der in der Einlassleitung angeordnet ist, um Luft unter Druck zu setzen, welche in den Motor geleitet wird; und
das Abgassystem (16) nach einem der Ansprüche 2-6, welches konfiguriert ist, um Abgas aus dem Motor in die Atmosphäre zu leiten.

## Revendications

1. Procédé pour rénover un moteur (12), comprenant :
placer un dispositif de traitement d'échappement (34, 36) dans une conduite d'échappement (26) du moteur ;
placer un dispositif de chauffage d'échappement (48) en communication de fluide avec la conduite échappement du moteur à un emplacement en amont du dispositif de traitement d'échappement ;
connecter un passage d'alimentation en air (54) au niveau d'une première extrémité à une conduite d'entrée (20) du moteur à un emplacement en aval d'un compresseur (22), et au niveau d'une deuxième extrémité au dispositif de chauffage d'échappement ; et
placer une soupape de restriction (58) dans la conduite d'entrée du moteur à un emplacement en aval de la première extrémité du passage d'alimentation en air ;
connecter un passage de contournement (60) au niveau d'une première extrémité à la conduite d'entrée du moteur à un emplacement en amont du compresseur, et au niveau d'une deuxième extrémité à la conduite d'entrée à un emplacement en aval de la première extrémité du passage d'alimentation en air ; et
placer une soupape de contournement (62) dans le passage de contournement.

2. Système d'échappement (16) pour un moteur (12), comprenant :
une conduite d'échappement (26) ;
un dispositif de traitement d'échappement (34, 36) disposé dans la conduite d'échappement ;
un dispositif de chauffage d'échappement (48) situé en communication avec la conduite d'échappement à un emplacement en amont du dispositif de traitement d'échappement ;
un passage d'alimentation en air (54) s'étendant à partir d'une conduite d'entrée (20) du moteur au niveau d'un emplacement en aval d'un compresseur (22) jusqu'au dispositif de chauffage d'échappement (48) ; et
une soupape de restriction (58) disposée dans la conduite d'entrée du moteur au niveau d'un emplacement en aval d'une entrée du passage d'alimentation en air ;
un passage de contournement (60) ayant une entrée en communication de fluide avec la conduite d'entrée au niveau d'un emplacement en amont du compresseur et une sortie en communication de fluide avec la conduite d'entrée au niveau d'un emplacement en aval du compresseur ; et
une soupape de contournement (62) disposée dans le passage de contournement.

3. Système d'échappement selon la revendication 2, dans lequel :
la soupape de restriction est contrôlée de façon électronique ; et
la soupape de contournement est contrôlée de façon mécanique.

4. Système d'échappement selon la revendication 3, dans lequel la soupape de contournement est connectée de façon mécanique pour se déplacer avec la soupape de restriction.

5. Système d'échappement selon la revendication 3, dans lequel la soupape de contournement est une soupape d'arrêt.

6. Système d'échappement selon la revendication 3, comprenant en outre un contrôleur (64) en communication avec le dispositif de chauffage d'échappement et la soupape de restriction, le contrôleur étant agencé pour activer le dispositif de chauffage d'échappement et fermer la soupape de restriction pour lancer un chauffage d'échappement.

7. Module de puissance (10), comprenant :
un moteur (12) ;
une conduite d'entrée (20) ;
un compresseur (22) disposé dans la conduite d'entrée pour pressuriser de l'air dirigé dans le moteur ; et
le système d'échappement (16) selon l'une quelconque des revendications 2 à 6 agencé pour diriger l'échappement du moteur vers l'atmosphère.
